(19) Europäisches Patentamt
European Patent Office
Office européen des brevets

(11) Veröffentlichungsnummer: **0 496 240 A2**

# (12) EUROPÄISCHE PATENTANMELDUNG

(21) Anmeldenummer: **92100417.2**

(22) Anmeldetag: **13.01.92**

(51) Int. Cl.[5]: **C08L 69/00**, C08L 67/02, C08L 51/04, C08L 57/00, C08L 27/12, C08L 81/02, C08K 5/51

(30) Priorität: **24.01.91 DE 4102003**

(43) Veröffentlichungstag der Anmeldung: **29.07.92 Patentblatt 92/31**

(84) Benannte Vertragsstaaten: **DE ES FR GB IT**

(71) Anmelder: **BAYER AG**
**W-5090 Leverkusen 1 Bayerwerk(DE)**

(72) Erfinder: **Wittmann, Dieter, Dr.**
**Wolfskaul 4**
**W-5000 Köln 80(DE)**
Erfinder: **Eckel, Thomas, Dr.**
**Gneisenaustrasse 15a**
**W-4047 Dormagen 1(DE)**
Erfinder: **Kress, Hans-Jürgen, Dr.**
**Scheiblerstrasse 111**
**W-4150 Krefeld 1(DE)**
Erfinder: **Schoeps, Jochen, Dr.**
**Windmühlenstrasse 126**
**W-4150 Krefeld(DE)**

## (54) Flammwidrige Polycarbonat/ABS-Legierungen.

(57) Polymerlegierungen aus aromatischen Polycarbonaten, Polyestern oder Polyestercarbonaten, Pfropfcopolymerisaten auf Kautschukbasis, thermoplastischen Harzen, einer Phosphorverbindung, einem fluorierten Polyolefin, enthaltend zusätzlich ein Polyarylensulfid, ein Verfahren zur Herstellung der Legierungen und ihre Verwendung zur Herstellung von Formkörpern.

EP 0 496 240 A2

Flammwidrige Mischungen aus Polycarbonaten und Acrylnitril-Butadien-Styrol-Copolymerisaten sind bekannt.

In der EP-A 0 174 493 werden flammwidrige Mischungen aus Polycarbonaten, thermoplastischen Vinylpolymerisaten und kautschukhaltigen Pfropfpolymerisaten beschrieben, die durch einen Zusatz von leichterflüchtigem Phosphat und Palytetrafluorethylen flammfest gemacht sind.

Auch Mischungen aus Polycarbonaten und Polyarylensulfiden sind bekannt.

So beschreibt die DE-OS 2 503 336 flammwidrige Mischungen mit guten mechanischen Eigenschaften aus Polycarbonaten und Polyphenylensulfiden, die sich durch verminderte Hydrolyseanfälligkeit auszeichnen.

Die EP-A 0 285 945 beschreibt pulverförmige Mischungen aus Polyarylensulfiden und thermoplastischen Vinylpolymerisaten und ihre Verwendung in thermoplastischen Formmassen. Zum Erreichen guter Oberflächenqualitäten der Formkörper werden Polyarylensulfid und Vinylpolymerisat als Dispersionen gemischt und gemeinsam aufgearbeitet.

Aus der DE-OS 2 903 100 sind flammwidrige Mischungen bekannt, die auch Mischungen aus Polycarbonat, Acrylnitril-Butadien-Styrol-Copolymerisaten und Polyphenylensufid enthalten können. Acrylnitril-Butadien-Styrol-Copolymerisat schließt auch Pfropfcopolymerisate ein.

Der Erfindung liegt die Erkenntnis zugrunde, daß Legierungen von Polycarbonat, Pfropfpolymerisaten und thermoplastischen Harzen, die übliche Flammschutz-Additive enthalten, durch Zugabe von Polyarylensulfid in ihrem Brandverhalten wesentlich verbessert werden. Konkret wird die Lochbildungstendenz beim Brand deutlich vermindert, so daß sogar die strengen Bedingungen der Canadian Standards Association (CSA) mit der Bestnote erfüllt werden.

Gegenstand der Erfindung sind als Formmassen geeignete Polymerlegierungen enthaltend:

A. 10 bis 95 Gew.-Teile eines aromatischen Polycarbonats, aromatischen Polyestercarbonats aromatischen Polyesters, oder Mischungen davon:

B. 5 bis 70 Gew.-Teile eines Pfropfpolymerisats von

B.1 5 bis 95 Gew.-Teilen eines polymerisierten Gemisches aus

B.1.1 50 bis 99 Gew.-Teilen Styrol, $\alpha$-Methylstyrol, kernsubstituiertem Styrol, Methylmethacrylat oder Mischungen daraus, und

B.1.2 1 bis 50 Gew.-Teilen (Meth-)Acrylnitril, Methylmethacrylat, n-Butylacrylat, t-Butyl(meth)-acrylat, Maleinsäureanhydrid, N-Alkyl- oder N-Aryl-substituiertem Maleinimid oder Mischungen daraus, als Pfropfauflage auf

B.2 5 bis 95 Gew.-Teile eines vernetzten, teilchenförmigen Kautschuks mit einem mittleren Teilchendurchmesser ($d_{50}$) von 0,05 bis 5 $\mu$m, vorzugsweise 0,1 bis 0,6 $\mu$m und einer Glasübergangstemperatur <10°C,

C. 1 bis 50 Gew.-Teile eines thermoplastischen Harzes, das

C.1 ein Copolymerisat, aus

C.1.1 50 bis 99 Gew.-Teilen Styrol, $\alpha$-Methylstyrol, kernsubstituiertem Styrol, Methylmethacrylat oder Mischungen daraus, und

C.1.2 1 bis 50 Gew.-Teilen Acrylnitril, Methacrylnitril, Methylmethacrylat, n-Butylacrylat, t-Butylacrylat, t-Butylmethacrylat, Maleinsäureanhydrid, N-Alkyl- mit N-Aryl-substituiertem Maleinimid oder Mischungen daraus,

oder

C.2 Polyalkylenterephthalat ist,

D. 0,5 bis 20 Gew.-Teile, vorzugsweise 1 bis 15 Gew.-Teile, pro 100 Gew.-Teile der Mischung aus A. B. und C., einer Phosphorverbindung der Formel (I)

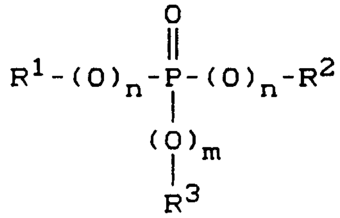

(I)

worin

$R^1$, $R^2$ und $R^3$ unabhängig voneinander gegebenenfalls halogeniertes $C_1$-$C_8$-Alkyl oder gegebenenfalls halogeniertes $C_6$-$C_{20}$-Aryl,

m, n 0 oder 1 bedeuten und

E. 0,05 bis 5 Gew.-Teile, vorzugsweise 0,1 bis 1 Gew.-Teile, pro 100 Gew.-Teile des Gemischs aus A., B. und C. eines fluorierten Polyolefins mit einem mittlerem Teilchendurchmesser von 0,5 bis 1000 µm, einer Dichte von 1,2 bis 2,3 g/cm$^3$ und einem Fluorgehalt von 65 bis 76 Gew.-%, bevorzugt mit einem mittleren Teilchendurchmesser von 0,05 bis 20 µm und einer Dichte von 1,2 bis 1,9 g/cm$^3$,das mit Emulsionen von Pfropfpolymerisat B. in einem Gewichtsverhältnis von B. zu E. wie 95:5 bis 60:40 cogefällt worden ist.

F. 1 bis 50, vorzugsweise 1 bis 40 Gew.-Teile Polyarylensulfid.

Die Bestandteile im Einzelnen:

A) Polycarbonate, Polyestercarbonate, Polyester

Aromatische Polycarbonate, aromatische Polyestercarbonate und aromatische Polyester A sind bekannt oder nach bekannten Verfahren herstellbar (zur Herstellung aromatischer Polycarbonate siehe beispielsweise Schnell, "Chemistry and Physics of Polycarbonates", Interscience Publishers, 1964, DE-AS 1 495 626, DE-OS 2 232 877, DE-OS 2 703 376, DE-OS 3 000 610, DE-OS 2 714 544: zur Herstellung aromatischer Polyester z.B. DE-OS 2 940 024, zur Herstellung aromatischer Polyestercarbonate z.B. DE-OS 3 007 934).

Aromatische Polycarbonate, aromatische Polyestercarbonate und aromatische Polyester können durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, durch Phasengrenzflächen-Polykondensation, gegebenenfalls unter Verwendung von Kettenabbrechern, beispielsweise Monophenolen, und gegebenenfalls unter Mitverwendung von trifunktionellen oder mehr als trifunktionellen Verzweigern, beispielsweise Triphenolen oder Tetraphenolen hergestellt werden.

Geeignete Diphenole sind vorzugsweise solche der Formel (II)

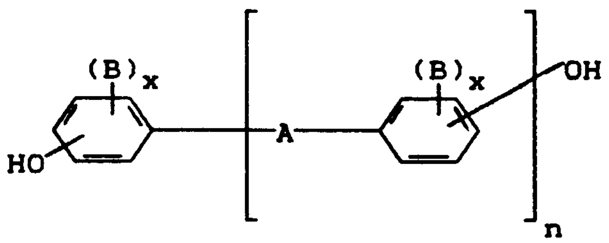

(II)

worin

A eine Einfachbindung, $C_1$-$C_5$-Alkylen, $C_2$-$C_5$-Alkyliden, $C_5$-$C_6$-Cycloalkyliden, -O-, -SO-, -CO-, -S-, -$SO_2$-, einen Rest der Formel (III)

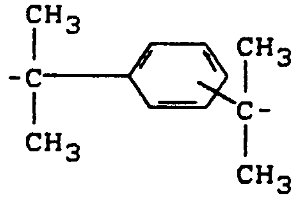

(III)

B Chlor, Brom

x o, 1 oder 2 und

n 1 oder 0 bedeuten.

Bevorzugte Diphenole sind Hydrochinon, Resorcin, Dihydroxydiphenyle, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfide, Bis-(hydroxyphenyl)-sulfone und $\alpha,\alpha$-Bis-(hydroxyphenyl)-diisopropylbenzole sowie deren kernbromierte und/oder kernhalogenierte Derivate.

Die wichtigen Diphenole sind Bisphenol-A, 2,4-Bis-(4-hydroxyphenyl)-2-methylbutan, 1,1-Bis-(4-hydroxyphenyl)-cyclohexan, 4,4'-Dihydroxydiphenylsulfid, 4,4'-Dihydroxydiphenylsulfon sowie deren di- und tetrabromierte oder chlorierte Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2-Bis-(4-hydroxyphenyl)-propan (Bisphenol-A).

Es können die Diphenole einzeln oder als beliebige Mischungen eingesetzt werden.

Die Diphenole sind bekannt oder nach bekannten Verfahren erhältlich.

Für die Herstellung der thermoplastischen, aromatischen Polycarbonate sind geeignete Kettenabbrecher z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 - 20 C-Atomen in den Alkylsubstituenten wie 3,5-ditert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol. Kettenabbrecher werden unter anderem in einer Menge von 0,5 bis 10 Mol-%, der verwendeten Diphenole eingesetzt.

Die thermoplastischen, aromatischen Polycarbonate haben mittlere Molekulargewichte ($\overline{M}_w$, gemessen durch Ultrazentrifugation oder Streulichtmessung) von 10 000 bis 200 000, vorzugsweise von 20 000 bis 80 000.

Sie können verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung geeigneter Copolycarbonate A. können auch 1 bis 25 Gew,-%, vorzugsweise 2,5 bis 25 Gew.-% (bezogen auf gesamte Diphenole), Diphenole der Formel (IV) verwendet werden,

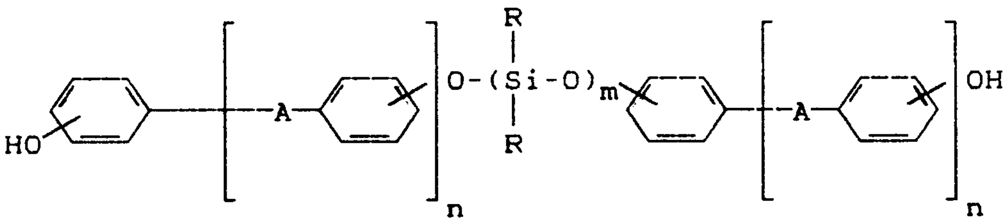

(IV)

worin

-A- die für Formel (II) genannte Bedeutung hat, n 1 oder null ist, die Reste R gleich oder verschieden sind und lineares $C_1$-$C_{20}$-Alkyl, verzweigtes $C_3$-$C_{20}$-Alkyl oder $C_6$-$C_{20}$-Aryl, vorzugsweise $CH_3$, bedeuten und m eine ganze Zahl von 5 bis 100, vorzugsweise von 20 bis 80 ist. Polydiorganosiloxane mit Hydroxy-aryloxy-Endgruppen der Formel IV sind bekannt (s. beispielsweise US-Patent 3 419 634) bzw. nach bekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol A-Homopolycarbonaten die Copolycarbonate von Bisphenol A mit bis zu 15 Mol-%, bezogen auf gesamte Diphenole, der oben genannten wichtigsten Diphenole, insbesondere des 2,2-Bis-(3,5-dibrom-4-hydroxyphenyl)-propans.

Geeignete Aromatische Dicarbonsäurehalogenide sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Für die Herstellung der aromatischen Polyester werden die Dicarbonsäuredihalogenide als einzige bifunktionelle Säurederivate verwendet; bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyester und Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole, und im Falle von Monocarbonsäurechlorid-Kettenabbrechern auf Mole Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in

bekannter weise verzweigt sein. (Vgl. DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phoroglucin, 4,6-Dimethyl-2,4,6-tri-(4-hydroxyphenyl)-hepten-2, 4,6-Dimethyl-2,4-6-tri-(4-hydroxyphenyl)-heptan, 1,3,5-Tri-(4-hydroxyphenyl)-benzol, 1,1,1-tri-(4-hydroxyphenyl)-ethan, Tri-(4-hydroxyphenyl)-phenylmethan, 2,2-Bis-[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis (2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4''-dihydroxytriphenyl)-methyl]-benzol, in Mengen von 0,01 bis 1,0 Mol% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyester und aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25 ° C).

Die thermoplastischen, aromatischen Polycarbonate und/oder Polyestercarbonate und/oder Polyester können allein oder im beliebigen Gemisch untereinander eingesetzt werden.

B. Pfropfpolymerisate

Die Pfropfpolymerisate B werden erhalten durch Pfropfcopolymerisation von Monomeren B.1 auf Kautschuke B.2 der Pfropfgrundlagen.

Beispiele für Monomere B.1 sind

B.1.1 Styrol, α-Methylstyrol, p-Methylstyrol, p-Chlorstyrol, Methylmethacrylat oder Mischungen daraus,

B 1.2 Acrylnitril, Methacrylnitril, Methylmethacrylat, n-Butylacrylat, t-Butylacrylat, Maleinsäureanhydrid und N-Phenyl-Maleinimid oder Mischungen daraus.

Normalerweise wird ein Monomer aus der Gruppe B.1.1 und eins aus der Gruppe B.1.2 ausgewählt, um das Copolymerisat zu bilden.

Im allgemeinen verwendet man 50-99 Gew.% B.1.1 und 1 bis 50 Gew.-Teile B.1.2.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol und B.1.2 Acrylnitril.

Für die Pfropfpolymerisate B. geeignete Kautschuke B.2 sind beispielsweise Dienkautschuke, EPM- und EPDM-Kautschuke, also solche auf Basis Ethylen/Propylen und gegebenenfalls nicht konjugiertem Dien; Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.), Gemische von Dienkautschuken und Copolymerisate von konjugierten Dienen mit anderen copolymerisierbaren Monomeren (z.B. den Monomeren B.1.1 und B.1.2), mit Glasübergangstemperaturen unterhalb 10 ° C, vorzugsweise unterhalb -10 ° C. Besonders bevorzugt ist Polybutadien.

Besonders bevorzugte Pfropfpolymerisate B. sind ABS-Polymerisate, die in der DE-OS 2 035 390 ( = US-PS 3 644 574) und in der DE-OS 2 248 242 ( = GB-PS 1 409 275) beschrieben sind.

Der Gelanteil des Kautschuks B.2 beträgt mindestens 60 Gew.-% (in Toluol gemessen); der mittlere Teilchendurchmesser $d_{50}$ des Pfropfpolymerisats B 0,05 bis 5 µm, vorzugsweise 0,1 bis 0,6 µm.

Die Pfropfcopolymerisate B. können durch radikalische Polymerisation, z.B. durch Emulsions-, Suspensions-, Lösungs- oder Massepolymerisation, vorzugsweise durch Emulsionspolymerisation hergestellt werden.

Da bei der Pfropfpolymerisation die Pfropfmonomeren nicht vollständig auf die Pfropfgrundlage polymerisieren, entsteht immer ein Gemisch aus eigentlichem Pfropfpolymerisat und freiem Copolymerisat der Pfropfmonomeren. Dieses Gemisch, d.h. das Reaktionsprodukt der Pfropfpolymerisation wird als Pfropfpolymerisat bezeichnet.

Als Pfropfbasis geeignete Acrylatkautschuke B.2 sind vorzugsweise Polymerisate aus Acrylsäurealkylestern, gegebenenfalls mit bis zu 40 Gew.-%, bezogen auf B.2, anderen polymerisierbaren, ethylenisch ungesättigten Monomeren. Bevorzugt sind Acrylsäure-$C_1$-$C_8$-alkylester wie Methyl-, Ethyl-, Butyl-, n-Octyl- und 2-Ethylhexylester und Acrylsäurehalogen-$C_1$-$C_8$-alkylester, wie Chlorethylacrylat, sowie Mischungen dieser Monomeren.

Zur Vernetzung der Acrylatkautschuke können Monomere mit mehr als einer polymerisierbaren Doppelbindung einpolymerisiert werden. Bevorzugte vernetzende Monomere sind Ester von ungesättigten Monocarbonsäuren mit 3 bis 8-C-Atomen mit ungesättigten einwertigen Alkoholen mit 3 bis 12 C-Atomen oder mit gesättigten Polyolen mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind Triallylcyanurat, Triallylisocyanurat, Trivinylcyanurat, Triacryloylhexahydro-s-triazin, Triallylbenzole.

Die vernetzenden Monomeren werden vorzugsweise in einer Menge von 0,02 bis 5, insbesondere 0,05 bis 2 Gew.-%, bezogen auf den Kautschuk B.2, eingesetzt.

Cyclische vernetzende Monomere mit mindestens 3 ethylenisch ungesättigten Gruppen werden vorteilhaft, in Mengen bis 1 Gew.-% des Kautschuks B.2 verwendet.

Bevorzugte andere copolymerisierbare Monomere sind Acrylnitril, Styrol, $\alpha$-Methylstyrol, Acrylamide, Vinyl-$C_1$-$C_6$-alkylether, Methylmethacrylat, Butadien.

Bevorzugte Acrylatkautschuke sind Emulsionspolymerisate mit einem Gelgehalt von mindestens 60 Gew.-%.

Weitere geeignete Kautschuke B.2 sind Silikonkautschuke mit pfropfaktiven Stellen, wie in DE-OS 37 04 657, DE-OS 37 04 655, DE-OS 36 31 540 und DE-OS 36 31 539 beschrieben.

Der Gelgehalt des Kautschuks B.2 wird bei 25 °C in einem geeigneten Lösungsmittel bestimmt (M. Hoffmann, H. Krömer, R. Kuhn, Polymeranalytik I und II, Georg-Thieme-Verlag, Stuttgart 1977).

Der mittlere Teilchendurchmesser $d_{50}$ ist der Durchmesser, oberhalb und unterhalb dessen jeweils 50 Gew.-% der Teilchen liegen. Er kann mit Ultrazentrifugenmessung (W. Scholtan, H. Lange, Kolloid, Z. und Z. Polymere 250 (1972), 782-796) bestimmt werden.

C. Thermoplastische Harze

Es handelt sich um Vinylcoplymerisate C.1 und um Polyalkylenterephthalate C.2.

C.1 Vinylpolymerisate

Geeignet sind Homo- und Copolymerisate von Vinylaromaten, Vinylcyaniden, (Meth)Acrylsäure sowie Methacrylsäure und deren $C_1$-$C_{18}$-Alkylester, und ethylenisch ungesättigte Dicarbonsäureanhydride bzw, deren Derivate.

Bevorzugte Vinylaromaten sind Styrol, $\alpha$-Methylstyrol und deren kernhalogenierte und kernalkylierte Derivate wie p-Methylstyrol und p-Chlorstyrol.

Bevorzugte Vinylcyanide sind Acrylnitril und Methacrylnitril; bevorzugte Acrylsäureester und Methacrylsäureester sind Methylmethacrylat, N-Butylacrylat, t-Butylacrylat und t-Butylmethacrylat.

Bevorzugte ethylenisch ungesättigte Dicarbonsäuren bzw. deren Derivate sind Maleinsäureanhydrid, N-Alkyl-maleinimid und N-Aryl-maleinimid.

Besonders bevorzugte thermoplastische Harze C.1 sind Copolymerisate aus

a. 50 bis 99 Gew.-% Styrol, $\alpha$-Methylstyrol, Methylmethacrylat oder Mischungen daraus, und

b. 1 bis 50 Gew.-% Acrylnitril, Methacrylnitril, Methylmethacrylat, Maleinsäureanhydrid oder Mischungen daraus.

Thermoplastische Harze C.1 entstehen häufig bei der Herstellung des Pfropfpolymerisats B als Nebenprodukte, besonders dann, wenn große Mengen Monomere B.1 auf kleine Mengen Kautschuk B.2 pfropfpolymerisiert werden.

Die erfindungsgemäß einzusetzende Menge an thermoplastischem Harz C.1 bezieht diese Nebenprodukte der Pfropfpolymerisation von B. nicht mit ein.

Die thermoplastischen Harze C.1 sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ (Gewichtsmittel, ermittelt durch Lichtstreuung oder Sedimentation) von 15.000 bis 200.000.

C.2 Polyalkylenterephthalate

Polyalkylenterephthalate C.2 im Sinne der Erfindung sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate C.2 lassen sich aus Terephthalsäure (oder ihren reaktionsfähigen Derivaten) und aliphatischen und cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate C.2 enthalten 80 bis 100, vorzugsweise 90 bis 100 Mol.-% bezogen auf die Dicarbonsäurekomponente, Terephthalsäurereste und 80 bis 100 vorzugsweise 90 bis 100 Mol-%, bezogen auf die Diolkomponente, Ethylenglykol- und/oder Butandiol-1,4-reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol- % anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxyphenyl)-propan, 2,4-Dihydroxy-1,1,3,3-tetramethylcyclobutan, 2,2-Bis-(3-β-hydroxyethoxy-phenyl)-propan und 2,2-Bis-(4-hydroxypropoxyphenyl)-propan (DE-OS 2 407 647, 2 407 776, 2 715 932).

Die Polyalkylenterephthalate C.2 können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -prpan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate C.2, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate C.2 sind auch Copolyester, die aus mindestens zwei der obengenannten Diole hergestellt sind; besonders bevorzugte Copolyester sind Poly-(ethylen-glykol/butandiol-1,4)-terephthalate. In den Copolyestern können die verschiedenen Diolreste in Form von Blöcken oder statistisch verteilt vorliegen.

Die Polyalkylenterephthalate C.2 besitzen im allgemeinen eine Intrinsic-Viskosität von 0,4 bis 1,5 dl/g, vorzugsweise 0,5 bis 1,3 dl/g, Insbesondere 0,6 bis 1,2 dl/g, jeweils gemessen in Phenol/o-Dichlorbenzol (1:1 Gew.-Tl.) bei 25 ° C.

D. Phosphorverbindungen

Geeignet sind alle üblicherweise als Flammschutzmittel verwendeten Phosphorverbindungen, insbesondere Phosphinoxide und Derivate von Säuren des Phosphors und Salze von Säuren und Säurederivaten des Phosphors.

Bevorzugt werden Derivate von Säuren des Phosphors und deren Salze, d.h. Derivate (beispielsweise Ester) der Phosphorsäure, Phosphonsäure, Phosphinsäure, phosphorigen Säure, auch jeweils in dehydratisierter Form, sowie Alkali-, Erdalkali- und Ammoniumsalze dieser Säuren bzw. deren Derivate (beispielsweise teilveresterter Säuren).

Besonders bevorzugte Phosphorverbindungen entsprechen der Formel (I)

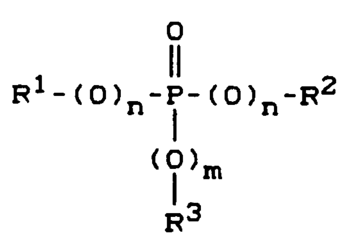

(I)

worin

$R^1$, $R^2$ und $R^3$ unabhängig voneinander gegebenenfalls halogeniertes $C_1$-$C_8$-Alkyl, gegebenenfalls haloge-

niertes und/oder alkyliertes $C_5$- oder $C_6$-Cycloalkyl, gegebenenfalls halogeniertes und/oder alkyliertes und/oder aralkyliertes $C_6$-$C_{30}$-Aryl bedeuten und n und m unabhängig voneinander 0 oder 1.

Solche Phosphorverbindungen sind bekannt (siehe Ullmann, Enzyklopädie der technischen Chemie, Band 18, Seiten 301 ff, 1979).

Gegebenenfalls halogenierte $C_1$-$C_8$-Alkylreste $R^1$ bis $R^3$ können einfach oder mehrfach halogeniert, linear oder verzweigt sein. Beispiele sind Chlorethyl, 2-Chlorpropyl, 2,3-Dibrompropyl, Butyl, Methyl und Octyl.

Gegebenenfalls halogenierte und/oder alkylierte $C_5$- oder $C_6$-Cycloalkylreste $R^1$ bis $R^5$ können einfach oder mehrfach halogenierte und/oder alkyliert sein. Beispiele sind Cyclopentyl, Cyclohexyl, 3,3,5-Trimethylcyclohexyl und perchloriertes Cyclohexyl.

Gegebenenfalls halogenierte und/oder alkylierte und/oder aralkylierte $C_6$-$C_{30}$-Arylreste $R^1$ bis $R^3$ können ein oder mehrkernig, einfach oder mehrfach halogeniert und/oder alkyliert und/oder aralkyliert sein, Beispiele sind Chlorphenyl, Bromphenyl, Pentachlorphenyl, Pentabromphenyl, Phenyl, Kresyl, Isopropylphenyl, benzylsubstituiertes Phenyl und Naphthyl.

Beispiele für Phosphorverbindungen der Formel (I) sind Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)-phosphat, Triphenylphosphinoxid, Methanphosphonsäuredimethylester, Methanphosphonsäurediphenylester und Phenylphosphonsäurediethylester.

E. Fluorierte Polyolefine

Geeignete fluorierte Polyolefine E sind hochmolekular und besitzen Glasübergangstemperaturen von über -30°C, bevorzugt von über 100°C, Fluorgehalte vorzugweise von 65 bis 76, insbesondere von 70 bis 76, Gew,-%, mittlere Teilchendurchmesser $d_{50}$ von 0,05 bis 1000, vorzugsweise 0,08 bis 20 µm und eine Dichte von 1,2 bis 2,3 g/cm³. Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate.

Fluorierte Polyolefine sind bekannt (vgl. "Vinyl and Related Polymers" von Schildknecht, John Wiley & Sons, Inc`, New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr, 10 A, Oktober 1970, McGraw-Hill, Inc,, New York, Seite 134 und 774; "Modern Plastics Encyclopedia", 1975-1976, Oktober 1975, Band 52, Nr, 10A, McGraw-Hill, Inc., New York, Seite 27, 28 und 472 und US-P 3 671 487, 3 723 373 und 3 838 092.

Sie können nach bekannten Verfahren hergestellt werden, beispielsweise durch Polymerisation von Tetrafluorethylen in wäßrigem Medium mit einem freien Radikale bildenden Katalysator, wie Natrium-, Kalium- oder Ammoniumperoxiddisulfat bei Drucken von 7 bis 71 kg/cm² und bei Temperaturen von 0 bis 200°C, vorzugsweise bei Temperaturen von 20 bis 100°C. (Nähere Einzelheiten siehe z.B. US-Patent 2 393 967).

Bevorzugte fluorierte Polyolefine E sind Tetrafluorethylenpolymerisate mit mittleren Teilchendurchmessern von 0,05 bis 20 µm, vorzugsweise 0,08 bis 10 µm, und einer Dichte von 1,2 bis 1,9 g/cm³.

Die fluorierten Polyolefine werden bevorzugt in Form einer koagulierten Mischung aus ihren Emulsionen mit Emulsionen der Pfropfpolymerisate C eingesetzt.

Besonders geeignete, in Pulverform einsetzbare fluorierte Polyolefine E sind Tetrafluorethylenpolymerisate mit Teilchendurchmessern von 100 bis 1000 µm und Dichten von 2,0 g/cm³ bis 2,3 g/cm³.

Zur Herstellung des Koagulats einer Mischung von Latices von C. und E. wird zuerst eine wäßrige Emulsion (Latex) eines Pfropfpolymerisates C mit mittleren Latexteilchendurchmesser von 0,05 bis 2 µm, insbesondere 0,1 bis 0,6 µm, mit einer feinteiligen Emulsion eines Tetrafluorethylenpolymerisates E. in Wasser mit mittlerem Teilchendurchmesser von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%` Die Emulsionen der Pfropfpolymerisate C besitzen Feststoffgehalte von 25 bis 50 Gew.-%, vorzugsweise von 30 bis 45 Gew.-%.

In der Emulsionsmischung liegt das Gewichtsverhältnis Pfropfpolymerisat C zum Tetrafluorethylenpolymerisat E bei 95:5 bis 60:40. Anschließend wird das Gemisch der Emulsionen in bekannter Weise koaguliert, beispielsweise durch Sprühtrocknen, Gefriertrocknen oder Koagulation mit anorganischen oder organischen Salzen, Säuren, Basen oder mit Wasser mischbaren organischen Flüssigkeiten, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind im Handel erhältlich und werden beispielsweise von DuPont als Teflon® 30 N angeboten.

F. Polyarylensulfid

Polyarylensulfide F umfassen Polymere, die im wesentlichen aus Arylenresten bestehen, die über Sulfidgruppen aneinander gebunden sind. Sie können durch die Formel (V)

$(\text{-Ar-S-})_n$ (V)

wiedergegeben werden in der Ar ein substituierter oder unsubstituierter Arylen, bevorzugt Phenylenrest und n eine Zahl, bevorzugt über 50 ist. Geeignete Ausgangsverbindungen und Herstellungsverfahren sind beispielsweise in den US-PS 3 354 129 und 3 919 177 beschrieben.

Die Polyarylensulfide und speziell Polyphenylensulfide können linear, verzweigt oder vernetzt sein.

Bei ihrer Herstellung können polyhalogenierte aromatische Verbindungen mit schwefelhaltigen Verbindungen in polaren organischen Lösungsmitteln, gegebenenfalls in Gegenwart von Katalysatoren, umgesetzt werden.

Geeignete polyhalogenierte aromatische Verbindungen sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin sowie deren Mischungen. Sollen verzweigte Polyarylensulfide hergestellt werden, müssen mindestens 0,05 Mol-% der polyhalogenierten aromatischen Verbindungen Tri- oder Tetrahalogenaromaten, wie 1,2,4-Trichlorbenzol, 1,3,5-Trichlorbenzol oder 1,2,4,5-Tetrachlorbenzol sein.

Geeignete schwefelhaltige Verbindungen sind Alkalisulfide wie Natrium- und Kaliumsulfid, Vorzugsweise werden Hydrate dieser Alkalisulfide eingesetzt. Die Alkalisulfide können auch aus Hydrogensulfiden mit Hilfe von Alkalihydroxiden wie Lithiumhydroxid, Natriumhydroxid in situ erzeugt werden,

Als polare Lösungsmittel sind beispielsweise N-Methylpyrrolidon, N-Ethylpyrrolidon, N-Methylcaprolactam, N-Ethylcaprolactam oder 1,3-Dimethylimidazolidinon geeignet.

Als Katalysatoren können Substanzen wie beispielsweise Alkalifluoride, Alkaliphosphate oder Alkalicarboxylate in Mengen von 0,02 bis 1.0 Mol pro Mol Alkalisulfid eingesetzt werden.

Die erfindungsgemäßen Polymerlegierungen können hergestellt werden, indem man ihre Bestandteile A-F in bekannter Weise vermischt und bei erhöhten Temperaturen, vorzugsweise bei 200 bis 350°, in üblichen Vorrichtungen, wie Innenknetern, Extrudern oder Doppelwellenschnecken, schmelzcompoundiert oder schmelzextrududiert. Die Bestandteile können nacheinander oder gleichzeitig gemischt werden.

Weiterer Gegenstand der Erfindung ist also ein Verfahren zur Herstellung der Polymerlegierungen durch Mischen ihrer Bestandteile bei erhöhter Temperatur.

Die erfindungsgemäßen Polymerlegierungen können weitere, für aromatische Polyester sowie Pfropfpolymerisate bekannte Zusätze, wie Stabilisatoren, Pigmente, Entformungsmittel, Flammschutzmittel und Antistatika, in den üblichen Mengen enthalten.

Die erfindungsgemäßen Polymerlegierungen können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe oder Automobilteile. Sie werden außerdem für elektrische Geräte, z.B. für Steckerleisten, eingesetzt.

Formkörper können auch durch Tiefziehen aus vorher hergestellten Platten oder Folien erzeugt werden.

Weiterer Gegenstand der Erfindung ist also die Verwendung der erfindungsgemäßen Polymerlegierungen zur Herstellung von Formkörpern.

## Beispiele

### A. Polycarbonate

A1

Lineares Polycarbonat auf Basis Bisphenol A mit einer relativen Lösungsviskosität von 1,26 bis 1,28, gemessen in $CH_2Cl_2$ als Lösungsmittel bei 25°C und in einer Konzentration von 0,5 g/100 ml.

A2

Copolycarbonat aus 90 Gew.-% Bisphenol A mit 10 Gew.-% Tetrabrombisphenol A mit einer relativen Lösungsviskosität von 1,284, gemessen in $CH_2Cl_2$ bei 25°C und einer Konzentration von 0,5 Gew.-%; Gehalt an Brom: 5 Gew.-%.

### B. Pfropfpolymerisate

B1
Pfropfpolymerisat von 45 Gew.-% Styrol/Acrylnitril-Gemisch (im Gew.-Verhältnis von 72:28) auf 55 Gew.-% teilchenförmiges Polybutadien eines mittleren Teilchendurchmessers ($d_{50}$) von 0,4 µm, erhalten durch Emulsionspolymerisation.
B2
Pfropfpolymerisat von 20 Gew.-% Methylmethacrylat/n-Butylacrylat-Gemisch (im Gew.-Verhältnis 90:10) auf 80 Gew.-% teilchenförmiges Polybutadien eines mittleren Teilchendurchmessers ($d_{50}$ von 0,4 µm, erhalten durch Emulsionspolymerisation.

C. Thermoplastisches Harz

C1
Styrol/Acrylnitril-Copolymerisat mit einem Styrol/Acrylnitril-Verhältnis von 72:28 und einer Grenzviskosität von 0,55 dl/g (Messung in Dimethylformamid bei 20° C).
C2
Lineares Polyethylenterephthalat mit einer Intrinsic-Viskosität [$\eta$] = 0,76 dl/g, gemessen in Phenol/o-Dichlorbenzol (1:1 Gewichtsteile) bei 25° C und einer Konzentration von 0,5 g/dl.

D. Phosphorverbindung

Triphenylphosphat

E. Fluoriertes Polyolefin

Komponente E. ist ein Koagulat eines Gemisches einer Pfropfpolymerisat-Emulsion B in Wasser und einer Tetrafluorethylenpolymerisat-Emulsion (Dichte des Feststoffes: 2,23 g/cm$^3$) in Wasser, Das Gewichtsverhältnis Pfropfpolymerisat B zu Tetrafluorethylenpolymerisat E in der Mischung ist 90:10. Die Tetrafluorethylenpolymerisat-Emulsion enthält 60 Gew.-% Feststoff, der Teilchendurchmesser ist 0,05 bis 0,5 µm. Die Pfropfpolymerisat-Emulsion enthält 34 Gew.-% Feststoff und hat einen mittleren Latexteilchendurchmesser von 0,4 µm.

Die Emulsion des Tetrafluorethylenpolymerisats wurde mit der Emulsion des Pfropfpolymerisats B vermischt und mit 1,8 Gew.-%, bezogen auf feste Polymere, phenolischem Antioxidans stabilisiert.Bei 85 bis 95° C wurde die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugieren von der Hauptmenge Wasser befreit und danach bei 100° C zu einem Pulver getrocknet.

F. Polyarylensulfid

Lineares Poly-p-phenylensulfid mit einer Schmelzviskosität von 44 Pa.s, gemessen bei 306° C (Schergeschwindigkeit 100 $s^{-1}$).

Herstellung und Prüfung der erfindungsgemäßen Polymerlegierungen

Die Komponenten A. bis F. wurden in einem 31-Innenkneter bei 210 bis 250° C aufgeschmolzen und homogenisiert.

Aus den Legierungen wurden auf einer Spritzgußmaschine (Verarbeitungstemperatur: 260° C) Prüfkörper der Abmessung 150 x 105 x 3 mm$^3$ hergestellt.

Das Brandverhalten der Proben wurde nach CSA Test A an drei Prüfkörpern (VW-Platten) nach 48 Stunden Lagerung im Normklima (Temperatur 23° C, 50 % Luftfeuchtigkeit) geprüft. Die vertikal eingespannten Prüfkörper werden mit einem Brenner (127 mm hohe Flamme, Flammtemperatur ca. 1200° C) unter einem Winkel von 20° 5 mal 15 s in der Mitte der Platte beflammt. Zwischen den Beflammungen liegen Pausen bis zum Verlöschen der Probe, mindestens aber 15 s und höchstens 30 s. Wenn eine Nachbrennzeit von mehr als 30 s zwischen den Beflammungen oder von mehr als 60 s nach der letzten Beflammung beobachtet wird, hat die Probe den Test nicht bestanden.

Bewertungsklassen:

A00 -keine Lochbildung
-kein brennendes Abtropfen
A01 -keine Lochbildung

| | |
|---|---|
| | -brennendes Abtropfen |
| A25 | -Loch kleiner as 6,4 mm im Durchmesser |
| | -kein brennendes Abtropfen |
| A25I | -Loch kleiner als 6,4 mm im Durchmesser |
| | -brennendes Abtropfen |
| A + + 0 | -Loch größer als 6,4 mm im Durchmesser |
| | -kein brennendes Abtropfen |
| A + + I | -Loch größer als 6,4 mm im Durchmesser |
| | -brennendes Abtropfen |
| f | -Nachbrennen nach der letzen Beflammung länger als 60 s |
| | -Nachbrennen in den Pausen länger als 30 s. |

Zusammensetzung und Eigenschaften der Legierungen

| Beispiele | Bestandteile [Gew.-Teile | | | | | | | | | CSA-Test A |
|---|---|---|---|---|---|---|---|---|---|---|
| | A1 | A2 | B1 | B2 | C1 | C2 | D | E | F | 3mm |
| A | 60 | -- | 10 | -- | 10 | -- | 10 | 4 | 20 | A 00 |
| B | 50 | -- | 10 | -- | 10 | -- | 10 | 4 | 30 | A 00 |
| C | 50 | -- | 10 | -- | 10 | -- | 8 | 3 | 30 | A 00 |
| D | -- | 60 | -- | 5 | -- | 30 | 6 | 3 | 10 | A 00 |
| E | -- | 50 | -- | 5 | -- | 40 | 6 | 3 | 10 | A 00 |

## Patentansprüche

1. Als thermoplastische Formmassen geeignete Polymerlegierungen, enthaltend:
   A. 10 bis 95 Gew.-Teile eines aromatischen Polycarbonats, aromatischen Polyestercarbonats,

aromatischen Polyestes, oder Mischungen davon.

B. 5 bis 70 Gew.-Teile eines Pfropfpolymerisats von

B.1 5 bis 95 Gew.-Teilen eines polymerisierten Gemisches aus

B.1.1 50 bis 99 Gew.-Teilen Styrol, α-Methylstyrol, kernsubstituiertem Styrol, Methylmethacrylat oder Mischungen daraus, und

B.1.2 1 bis 50 Gew.-Teilen (Meth-)Acrylnitril, Methylmethacrylat, n-Butylacrylat, t-Butyl(meth)-acrylat, Maleinsäureanhydrid, N-Alkyl- oder N-Aryl-substituiertem Maleinimid oder Mischungen daraus, als Pfropfauflage auf

B.2 5 bis 95 Gew.-Teile eines vernetzten, teilchenförmigen Kautschuks mit einem mittleren Teilchendurchmesser ($d_{50}$) von 0,05 bis 5 µm, vorzugsweise 0,1 bis 0,6 µm und einer Glasübergangstemperatur <10 °C,

C. 1 bis 50 Gew.-Teile eines thermoplastischen Harzes, das

C.1 ein Copolymerisat, aus

C.1.1 50 bis 99 Gew.-Teilen Styrol, α-Methylstyrol, kernsubstituiertem Styrol, Methylmethacrylat oder Mischungen daraus, und

C.1.2 1 bis 50 Gew.-Teilen Acrylnitril, Methacrylnitril, Methylmethacrylat, n-Butylacrylat, t-Butylacrylat, t-Butylmethacrylat, Maleinsäureanhydrid, N-Alkyl- mit N-Aryl-substituiertem Maleinimid oder Mischungen daraus,

oder

C.2 Polyalkylenterephthalat ist

D. 0,5 bis 20 Gew.-Teile, vorzugsweise 1 bis 15 Gew.-Teile, pro 100 Gew.-Teile der Mischung aus A., B. und C., einer Phosphorverbindung der Formel (I)

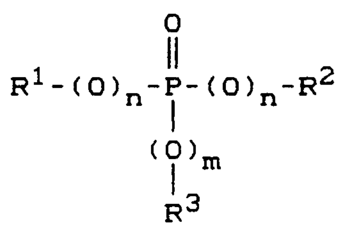

(I)

worin

$R^1$, $R^2$ und $R^3$ unabhängig voneinander gegebenenfalls halogeniertes $C_1$-$C_8$-Alkyl oder gegebenenfalls halogeniertes $C_6$-$C_{20}$-Aryl,

m, n 0 oder 1 bedeuten und

E. 0,05 bis 5 Gew.-Teile, vorzugsweise 0,1 bis 1 Gew.-Teile, pro 100 Gew.-Teile des Gemischs aus A., B. und C. eines fluorierten Polyolefins mit einem mittleren Teilchendurchmesser von 0,5 bis 1000 µm, einer Dichte von 1,2 bis 2,3 g/$cm^3$ und einem Fluorgehalt von 65 bis 76 Gew.-%.

F. 1 bis 50 Gew.-Teile Polyarylensulfid.

**2.** Legierungen gemäß Anspruch 1, enthaltend 1 bis 40 Gew.-Teile der Komponente F.

**3.** Legierungen gemäß Anspruch 1, enthaltend Stabilisatoren, Pigmente, Entformungsmittel, Fließhilfsmittel, Füll- und Verstärkungstoffe und/oder Antistatika.

**4.** Verfahren zur Herstellung der Legierungen nach Anspruch 1, dadurch gekennzeichnet, daß man A. bis F. und gegebenenfalls Stabilisatoren, Pigmente, Entformungsmittel, Fließhilfsmittel, Füll- und Verstärkungsstoffe und/oder Antistatika in bekannter Weise simultan oder sukzessive vermischt und bei erhöhten Temperaturen in üblichen Vorrichtungen schmelzcompoundiert oder schmelzextrudiert.

**5.** Verwendung der Legierungen nach Anspruch 1 zur Herstellung von Formkörpern.

**6.** Legierungen gemäß Anspruch 1, bei denen die Komponente E. durch Cofällung aus fluorierten Polyolefinen mit Emulsionen von Pfropfpolymerisat B. in einem Gewichtsverhältnis von B. zu E. wie 95:5 bis 60:40 hergestellt wird.

**Patentansprüche für folgenden Vertragsstaat : ES**

**1.** Verfahren zur Herstellung von als thermoplastische Formmassen geeigneten Polymerlegierungen, enthaltend:

A. 10 bis 95 Gew.-Teile eines aromatischen Polycarbonats, aromatischen Polyestercarbonats, aromatischen Polyesters, oder Mischungen davon.

B. 5 bis 70 Gew.-Teile eines Pfropfpolymerisats von

B.1 5 bis 95 Gew.-Teilen eines polymerisierten Gemisches aus

B.1.1 50 bis 99 Gew.-Teilen Styrol, $\alpha$-Methylstyrol, kernsubstituiertem Styrol, Methylmethacrylat oder Mischungen daraus, und

B.1.2 1 bis 50 Gew.-Teilen (Meth-)Acrylnitril, Methylmethacrylat, n-Butylacrylat, t-Butyl(meth)-acrylat, Maleinsäureanhydrid, N-Alkyl- oder N- Aryl-substituiertem Maleinimid oder Mischungen daraus, als Pfropfauflage auf

B.2 5 bis 95 Gew.-Teile eines vernetzten, teilchenförmigen Kautschuks mit einem mittleren Teilchendurchmesser ($d_{50}$) von 0,05 bis 5 $\mu$m, vorzugsweise 0,1 bis 0,6 $\mu$m und einer Glasübergangstemperatur <10 °C,

C. 1 bis 50 Gew.-Teile eines thermoplastischen Harzes, das

C.1 ein Copolymerisat, aus

C.1.1 50 bis 99 Gew.-Teilen Styrol, $\alpha$-Methylstyrol, kernsubstituiertem Styrol, Methylmethacrylat oder Mischungen daraus, und

C.1.2 1 bis 50 Gew.-Teilen Acrylnitril, Methacrylnitril, Methylmethacrylat, n-Butylacrylat, t-Butylacrylat, t-Butylmethacrylat, Maleinsäureanhydrid, N-Alkylmit N-Aryl-substituiertem Maleinimid oder Mischungen daraus,

oder

C.2 Polyalkylenterephthalat ist

D. 0,5 bis 20 Gew.-Teile, vorzugsweise 1 bis 15 Gew.-Teile, pro 100 Gew.-Teile der Mischung aus A., B. und C., einer Phosphorverbindung der Formel (I)

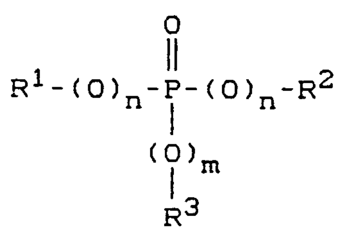

(I)

worin

$R^1$, $R^2$ und $R^3$ unabhängig voneinander gegebenenfalls halogeniertes $C_1$-$C_8$-Alkyl oder gegebenenfalls halogeniertes $C_6$-$C_{20}$-Aryl,

m, n 0 oder 1 bedeuten und

E. 0,05 bis 5 Gew.-Teile, vorzugsweise 0,1 bis 1 Gew.-Teile, pro 100 Gew.-Teile des Gemischs aus A., B. und C. eines fluorierten Polyolefins mit mittlerem Teilchendurchmesser von 0,5 bis 1000 $\mu$m, einer Dichte von 1,2 bis 2,3 g/cm$^3$ und einem Fluorgehalt von 65 bis 76 Gew.-%, bevorzugt mit einem mittleren Teilchendurchmesser von 0,05 bis 20 $\mu$m und einer Dichte von 1,2 bis 1,9 g/cm$^3$ das mit Emulsionen von Pfropfpolymerisat B. in einem Gewichtsverhältnis von B. zu E. wie 95:5 bis 60:40 co-gefällt worden ist.

F. 1 bis 50, vorzugsweise 5 bis 40 Gew.-Teile Polyarylensulfid, dadurch gekennzeichnet, daß man A. bis F. und gegebenenfalls Stabilisatoren, Pigmente, Entformungsmittel, Fließhilfsmittel, Füll- und Verstärkungsstoffe und/oder Antistatika in bekannter Weise simultan oder sukzessive vermischt und bei erhöhten Temperaturen in üblichen Vorrichtungen schmelzcompoundiert oder schmelzextrudiert.